# EUROPEAN PATENT SPECIFICATION

(11) **EP 4 209 951 B1**
(45) Date of publication and mention of the grant of the patent: **25.06.2025**
(21) Application number: 22150434.3
(22) Date of filing: 06.01.2022
(51) Int. Cl.: G06F 21/62

(54) **A METHOD, A COMPUTER PROGRAM PRODUCT AND A DEVICE FOR DYNAMIC SPATIAL ANONYMIZATION OF VEHICLE DATA IN A CLOUD ENVIRONMENT**
VERFAHREN, COMPUTERPROGRAMMPRODUKT UND VORRICHTUNG ZUR DYNAMISCHEN RÄUMLICHEN ANONYMISIERUNG VON FAHRZEUGDATEN IN EINER CLOUD-UMGEBUNG
PROCÉDÉ, PRODUIT-PROGRAMME INFORMATIQUE ET DISPOSITIF D'ANONYMISATION SPATIALE DYNAMIQUE DE DONNÉES DE VÉHICULE DANS UN ENVIRONNEMENT EN NUAGE

(43) Date of publication of application: 12.07.2023
(73) Proprietor: VOLKSWAGEN AG, 38440 Wolfsburg (DE)
(72) Inventor: Alazzawi, Sabina, 80807 München (DE); Dondapati, Chaitanya Kumar, 85640 Putzbrunn (DE); Niestroj, Richard, 80802 München (DE); Resce, Pierpaolo, 82110 Germering (DE)

(56) References cited:
- GB-A- 2 583 363
- US-B1- 9 842 017

## Description

The invention is related to a method for dynamic spatial anonymization of vehicle data in a cloud environment according to the independent method claim. Further, the invention is related to a corresponding computer program product according to the independent product claim. Furthermore, the invention is related to a corresponding device, especially backend device, according to the independent device claim.

Real-time vehicular data plays a key role in current data driven projects. Typical use cases concerned with the analysis of vehicular information extracted from installed sensors include e.g. the creation of maps providing parking or weather information. The displayed information thereby may be a result of advanced analytics including, in particular, forecasts that can be in return consumed by the vehicle.

Due to in-car computational constraints, advanced analytics usually take place in a cloud environment. Thus, the sensor data is extracted and shared with a cloud platform. This approach requires, however, the anonymization of the extracted data due to data protection requirements. The sensitive data content for the considered use cases is represented by the tuple of temporal and spatial data which un-anonymized allows for the exact location of the data creator at an exact point in time. Present state of the art technologies, therefore, shift the extracted data by an additive constant with respect to time or space. The goal, thereby, is to decouple the time and space tuple and further hide the identity of the data creator in an anonymization group that aggregates data from several sources/creators. The amount of the applied temporal or spatial shift can depend on the traffic density. The shift may be increased with decreasing traffic density and vice versa decreased with increasing traffic density.

Although the anonymization approach of pure temporal shifts has undergone several iterations improving e.g. the quality of the resulting anonymized data, current state of the art spatial anonymization techniques lack optimization.

Presently, spatial anonymization is based on static grid structures with predefined grid sizes which do not allow for arbitrary dynamic adjustments based on the underlying traffic density.

This circumstance usually results in less accurate applications as the required level of data granularity is mostly not met in such a framework, finally ruling out certain use cases.

On the other hand, the static grid spatial anonymization approach also neglects sparsely populated areas which typically imply small traffic densities. This is due to the predefined grid sizes that do not exceed a certain limit. As a result, data extracted in such areas usually is bound to deletion as anonymization fails.

Furthermore, current spatial anonymization techniques lack runtime optimization. Besides, current spatial anonymization techniques have to process big data loads. Since most use cases in consideration rely on big vehicle fleets, the state of the art spatial anonymization struggles to meet this requirement.

Some known technics are disclosed in GB 2 583 363 A and US 9 842 017 B1.

The aim of the present invention is to provide an improved method for dynamic spatial anonymization of vehicle data in a cloud environment. Especially, the aim of the present invention is to provide a flexible and/or adaptive method for dynamic spatial anonymization of vehicle data in a cloud environment, which allows for arbitrary sizes and locations of the anonymization areas and does not rely on underlying static grid structures and which serve for enhanced privacy protection, even for sparsely covered areas. Furthermore, it is the aim of the present invention is to provide an improved method for dynamic spatial anonymization of vehicle data in a cloud environment, which enhances aggregation techniques and which increases the quality and the reliability of the anonymized data. Moreover, the aim of the present invention is to provide an improved method for dynamic spatial anonymization of vehicle data in a cloud environment, which reduces computational runtime, in particular, in case of big data loads. Also, the aim of the invention is to provide a corresponding computer program product. Besides, the aim of the invention is to provide a device, especially backend device, for dynamic spatial anonymization of vehicle data in a cloud environment.

According to the first aspect, embodiments of the invention provide a method for dynamic spatial anonymization of vehicle data in a cloud environment with the features of the independent method claim. According to the second aspect, embodiments of the invention provide a corresponding computer program product for a respective method with the features of the independent product claim. According to the third aspect, embodiments of the invention provide a corresponding device, especially backend device, for dynamic spatial anonymization of vehicle data in a cloud environment with the features of the independent device claim. Details and features disclosed on individual aspects of the invention also apply to the other aspects of the invention and vice versa.

According to the first aspect, embodiments of the invention provide a method for dynamic spatial anonymization of vehicle data in a cloud environment,
the method comprising:
- (dynamic) collecting vehicle data,
- (dynamic) spatial partitioning (may also be called geospatial indexing and/or splitting) the vehicle data into data subsets dynamically associated with different geographical areas of various sizes and comprising a maximal amount of records within each data subset, using an iterative splitting of incoming sets of records into geographical areas having different resolution levels,
- (dynamic) spatial aggregation of (may also be called compiling and/or combining) the vehicle data within the data subsets, providing two level aggregation:

| | |
|---|---|
| first level | aggregation of vehicle data (within a data subset), coming from a single vehicle (within an associated geographical area), to a corresponding data point and |
| second level | aggregation of data points, coming from a group of vehicles comprising a particular number of vehicles (within an associated geographical area), to a spatial aggregated data set. |

The method may be executed by an external device, such as a backend device in the cloud, in order to save computational power of the vehicle side and to provide enhanced computational resources for dynamic spatial anonymization of vehicle data.

The actions of the method may be carried out in the given order or in a modified order. Individual actions of the method may be carried out simultaneously and/or repeatedly to allow a flowing process.

For collecting vehicle data, a plurality of participating vehicles may send vehicle data, for example in the form of records and/or measurements, preferably comprising sensor data, such as environmental data, temperature values, humidity values, rain intensity, slipping coefficient, etc., and spatial data, such geographical coordinates, to the external device. The vehicle data may also comprise time stamp.

The collecting of vehicle data may be done periodically, for example over a time interval. The time interval may be determined by a performing device, preferably individually for different vehicle services, such as navigation services, map services and/or forecast services etc. Each time, after collecting vehicle data within one time interval, the vehicle data will be anonymized before further use, for example for storing, processing and/or providing vehicle services.

The spatial partitioning within the meaning of the present disclosure may also be explained as splitting over geographical areas. The spatial partitioning of the vehicle data may be preferably used for reducing the amount of records intended to be anonymized in one execution.

Vehicle data aggregation within the meaning of the present disclosure may also be explained as compiling of vehicle data with intent to prepare aggregated (or combined) data sets for further data processing. The spatial aggregation may be preferably used for anonymization of the vehicle data, especially within a current time interval, within a corresponding data subset and/or within an associated geographical area.

The presented method solves the above-mentioned problems of static grid sizes and handling of great amounts of data by spatial anonymization approaches. The presented method is based on a dynamic approach that allows for both dynamic adjustment of grids and dynamic partitioning of big data loads.

In the case of vehicle application, there are massive amounts of geo-related data, which cannot be efficiently anonymized all in one execution. To overcome this challenge, the vehicle data may be splitted spatially by applying geospatial indexing. Geospatial indexing will be described in the following.

### I Spatial partitioning

Geospatial indexing is the process of partitioning areas of the Earth into identifiable grid cells. Geospatial indexing is a preferably faster than indexing to areas with static grid sizes.

For spatial partitioning within the present disclosure, especially using geospatial indexing, the world and/or a geographical region of interest may be divided into geographical areas with different resolutions, for example starting from 0 until 15. Resolution may be defined as a number of records over a geographic extent of the area. Each area for each resolution gets its own unique ID. Thus, each data subset within an associated geographical area gets the same ID.

For spatial partitioning within the present disclosure, especially using geospatial indexing, following conditions may be provided for splitting the records into subsets:
1. Each data subset comprises a maximal amount (N) of records. The maximal amount of records may be chosen based upon computational capacity constraints of the performing device, such as a backend device in the cloud.
2. Each data subset is denoted by a unique ID. Each unique ID of data subsets correspond to the unique ID of associated geographical areas. The IDs of data subsets within the present disclosure may be represented by the counter.

For spatial partitioning within the present disclosure, especially using geospatial indexing, following actions may be executed:
I.1. For each time interval in which spatial anonymization should be performed iteratively over geo-coordinates starting from the resolution 0 (highest resolution level).
I.2. If found any geographical area comprising a corresponding data subset which has less than N records, then assign unique ID to this data subset.
I.3. Identify geographical areas comprising corresponding data subsets which have more than N records.
I.4. Split the geographical areas comprising corresponding data subsets which have more than N records with an incremental resolution which is now 1.
I.5. Repeat steps I.2, I.3 and I.4 until all records are assigned to geographical areas comprising corresponding data subsets which have less than N records or until the resolution reaches a maximal available value, for example 15.

### II Spatial aggregation, comprising preferably two level aggregation

The dynamic spatial anonymization follows preferably a two level aggregation approach.

Vehicle data aggregation may further preferably use the information advantage that is available for non-anonymized data prior to anonymization.

Vehicle data aggregation provides a combination of multiple vehicle data, records and/or measurements aggregated to a lower number of values, and thus providing anonymization,

| | |
|---|---|
| first level i | aggregation within vehicle data from every single vehicle, preferably reducing the effect of sensor noise, for example removing data outliers, and/or highlighting some unusual measurement of interest. |
| second level j | aggregation within vehicle data coming from several vehicles in the same area combined to groups of k-members. |

Thus, the amount of vehicle data to be anonymized in one execution may be considerably reduced with the help of spatial aggregation.

By assuming that the information measured from a single vehicle does not vary significantly in a certain time interval, and the sensor sampling frequency is higher than needed, it is possible to aggregate the data coming from a single vehicle without losing significant information. Thus, the relevant information may be reliably maintained.

For example, by collecting temperature measurements in a certain area, the temperature sampling frequency on the vehicle may be 1Hz. It may be possible to aggregate together the temperature information provided from a single vehicle in the same time interval, e.g. 10 s, without losing relevant information. The temperature usually does not change significantly within in 10 s. Also, the vehicle displacement in such a time interval may be neglected for the specific use-case, but the amount of data to process is 10 times smaller.

For example, by collecting the rain intensity measurements, it may happen that the vehicle passes under some roof, bridge or tree. In this case these unusual measurements may be considered as an outlier in the 10 s time window. The data aggregation may preferably filter out the effects of such outliers.

The data aggregation may also highlight some uncommon measurement. For example, by collecting the slipping coefficient of the road in a certain area, in a certain time, due to ice slabs on the street, it is possible to take into account each single ice slab on the road, even if small. Aggregated data in this case will contain the information about the "ice", even if for most of the 10 s time interval there was no ice on the road.

Thus, the data quality may be improved with the help of filtering and/or highlighting the vehicle data.

In general for each sensor type, signal source and/or data type, a different aggregation methodology may be applied that has proven to be valuable for the specific cases. Aggregation methodologies comprehend statistical indicators (mean, max, n-th percentile, etc...), a combination of them, or functions implemented ad hoc for the specific use-case.

Thus, improving quality and reliability of data prior to anonymization.

A second level of aggregation may be then performed between measurements coming from a set of several vehicles in the same time interval and in the same area. This second step of aggregation allows to reach the anonymization goal, because from the aggregated data it would be extremely unlikely to go back to the single vehicle that contributed to the aggregated data.

Preferably the vehicle data may be collected periodically with a time interval. More preferably the time interval may be chosen depending on vehicle service, sensor type, signal source and/or data type. Thus, the properties and requirements of vehicle services and/or evaluable vehicle data may be advantageously taken into account by adapting the dynamic of the spatial anonymization.

According to one advantage of the method, the spatial partitioning may be used for reducing the amount of records intended to be anonymized in one execution. According to another advantage of the method, the spatial aggregation may be used for anonymization of the vehicle data, especially within a current time interval, within a corresponding data subset and/or within an associated geographical area.

Further, the spatial aggregation may be provided using the k-anonymity methodology. More preferably, a spatial aggregated data set aggregates data points coming from different vehicles arranged into groups using the k-nearest neighbor method. In this way, effective data protection may be provided with simple techniques and without much computational effort.

Furthermore, it may be preferable, if a spatial aggregated data set multiply aggregates data points coming from different vehicles, wherein especially some vehicles will be arranged to more than one group. Thus, overlapping groups of vehicles may be provided within an associated geographical area of the corresponding data subset. This allows using data from one vehicle multiple times, thus enlarging the value of data significantly.

Preferably, the vehicle data may comprise sensor data and spatial data. Hereby the sensor data may comprise environmental data, temperature values, humidity values, rain intensity, slipping coefficient, etc. Therefore, a data point coming from a single vehicle comprises aggregated sensor data and aggregated spatial data for the single vehicle. Thus, a spatial aggregated data set coming from a group of vehicles comprises aggregated sensor data and aggregated spatial data for the group of vehicles.

According to one further advantage of the method, vehicle data within a data point may be filtered in order to exclude unusual measurements. Thus, the quality and reliability of the data may be achieved.

According to one still further advantage of the method, vehicle data within a data point may be highlighted in order to detect environmental effects, such as ice slabs on the street, in highly restricted areas within a particular geographical area. Thus, restricted effects that may not be registered by all participants can still be detected by the method. Therefore, the value of the data may be significantly increased.

For increased functionality and suitability of the method, the spatial aggregation may be performed using different aggregation methodologies for different vehicle services, sensor types, signal sources and/or data types. Hereby, a particular aggregation methodology may be chosen depending on vehicle service, sensor type, signal source and/or data type.

Advantageously, the spatial partitioning may be provided using a method of geospatial indexing. Thus, dynamic adjustment of grids and dynamic partitioning of big data loads may be provided.

Further, it is provided, that the spatial partitioning is provided using an iterative splitting of an incoming set of records into geographical areas having different resolution levels. Thus, a reduction of big data loads may be provided in an iteratively way.

Furthermore, it may be possible, that the spatial partitioning may be provided until a data subset comprises an amount of records lower than the maximal amount of records. Thus, the computational constrains of a performing device may be addressed.

More preferably, the maximal amount of records may be chosen according to computational capacity of a performing device.

According to a further aspect of the invention a computer program product is provided, comprising instructions which, when the program is executed by a computer, cause the computer to carry out a method as described above. With the help of the computer program product, the same advantages may be achieved as described above in the context of the inventive method. Full reference is made to these advantages in the present case.

According to a further aspect of the invention a device, especially backend device, is provided, comprising a memory device in which program code is stored, and a computing device configured to execute the program code, wherein when executing the program code, a method may be performed as described above. With the help of the device, the same advantages may be achieved as described above in the context of the inventive method. Full reference is made to these advantages in the present case.

Preferably, the memory device may comprise a database for spatial aggregated data sets. With the help of the database, the anonymized vehicle data may be stored und easily used, especially combined with a goal that the individual vehicles cannot be re-identified, while the data remains useful for vehicle services.

Advantageously, the computing device may be configured to provide vehicle services, comprising navigation services, map services and/or forecast services etc., to participating vehicles using the aggregated data sets. More preferably, the computing device may be configured to provide different vehicle services depending on service type, signal source and/or data type. Thus, the different vehicle services may be provided with more quality and increased functionality.

Embodiments of the invention and its further developments as well as its advantages will be explained in more detail below using figures. The figures show schematically:
- Fig. 1: generic representation of data partitioning using geospatial indexing,
- Fig. 2: single vehicle data aggregation,
- Fig. 3: multi vehicle data aggregation,
- Fig. 4: results of dynamic spatial anonymization for one time interval, and
- Fig. 5: results of dynamic spatial anonymization for two time intervals.

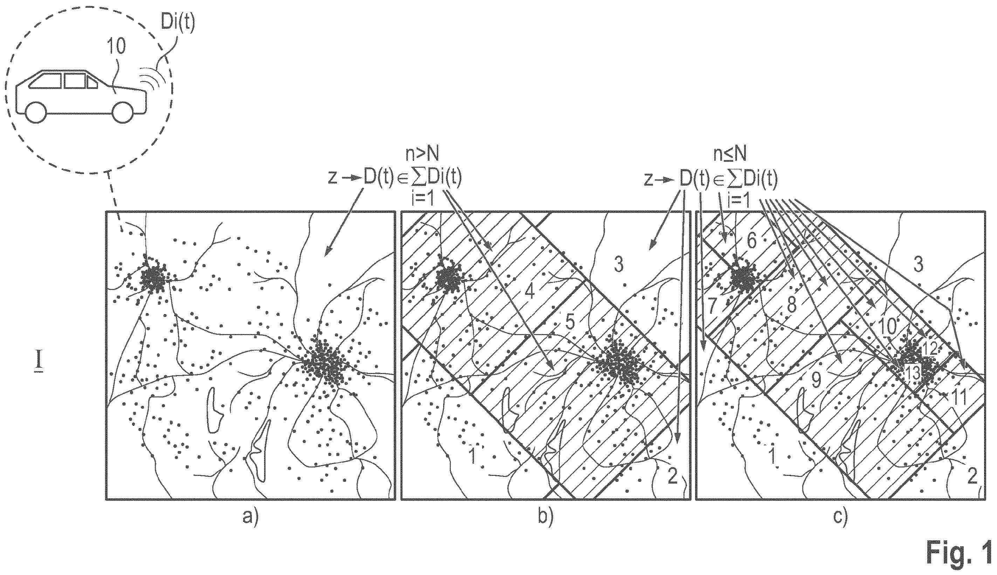

Fig. 1 to 5 serve for explaining an inventive method for dynamic spatial anonymization of vehicle data in a cloud environment,
the method comprising:
- 0: (dynamic) collecting vehicle data D(t),
- I: (dynamic) spatial partitioning (or geospatial indexing and/or splitting) the vehicle data D(t) into data subsets DZ(t), especially dynamically, associated with different geographical areas Z of various sizes and comprising a maximal amount N of records within each data subset DZ(t),
- II: (dynamic) spatial aggregation of (or compiling and/or combining) the vehicle data D(t) within the data subsets DZ(t), providing two level aggregation:

| | |
|---|---|
| first level i | aggregation of vehicle data Di(t) (within a data subset DZ(t)), coming from a single vehicle (10) (within an associated geographical area Z), to a corresponding data point Di_mean and |
| second level j | aggregation of data points Di_mean, coming from a group of vehicles 10 comprising a particular number k of vehicles 10 (within an associated geographical area Z), to a spatial aggregated data set Dj_mean. |

The method may be executed by an external device 20, such as a backend device in the cloud, in order to save computational power of the vehicle's side and to provide enhanced computational resources for providing improved vehicle services.

The present method provides variable grid sizes and handles great amounts of data in a preferable effective manner. The presented method is based on a dynamic approach that allows for both dynamic adjustment of grids and dynamic partitioning of big data loads.

In the case of vehicle application, there are massive amounts of geo-related data, which cannot be efficiently anonymized all at the same time and/or in one execution. To overcome this challenge, the vehicle data D(t) may be splitted spatially, for example by applying geospatial indexing, as explained in the following and represented in fig. 1.

### I Spatial partitioning

For spatial partitioning within the present disclosure, especially using geospatial indexing, the world and/or a geographical region (s. the first representation a in fig.1) of interest may be divided into geographical areas with different resolutions. In an example, the resolution may be iterated from 0 till 15. Resolution may be represented by a number of records in a geographic area. The records are shown in fig. 1 as single points. As the second and the third representations b and c in fig.1 show, each area Z for each resolution gets its own unique ID (for example from 1 to 13). Thus, each data subset DZ(t) within an associated geographical area gets the same ID.

For spatial partitioning/geospatial indexing following conditions may be provided for splitting the vehicle data D(t) into subsets DZ(t):
1. Each data subset DZ(t) comprises a maximal amount N of records. The maximal amount N of records may be chosen based upon computational capacity constraints of the performing device 20, such as backend device in the cloud.
2. Each data subset DZ(t) is denoted by unique ID (s. number Z from 1 to 13 in fig. 1). Each unique ID of data subsets DZ(t) corresponds to the unique ID of associated geographical areas Z. Thus, the IDs of data subsets DZ(t) are represented by the counter Z.

As fig. 1 represents, following actions may be executed for spatial partitioning/geospatial indexing:
I.1 For each time interval in which spatial anonymization should be performed iteratively over geo-coordinates starting from the resolution 0 (highest resolution level, the first representation a in fig. 1).
I.2 If found any geographical area Z comprising a corresponding data subset DZ(t) which has less than N records, then assign unique ID to this data subset DZ(t).
I.3 Identify (see areas 4 and 5 in the second representation b in fig. 1) geographical areas Z comprising corresponding data subsets DZ(t) which have more than N records.
I.4 Split the geographical areas Z comprising corresponding data subsets DZ(t) which have more than N records with an incremental resolution which is now 1.
I.5 Repeat steps I.2, I.3 and I.4 until all records are assigned to geographical areas Z comprising corresponding data subsets DZ(t) which have less than N records (the third representation c in fig. 1) or until the resolution reaches maximal available value, for example 15.

Representation of data partitioning using geospatial indexing shown in fig. 1 illustrates how the method iteratively splits the incoming vehicle data D(t).
a) Initial vehicle data D(t) collected from participating vehicles 10. This vehicle data D(t) contains more than N records and it is computationally intensive to perform anonymization on it.
b) First step of (dynamic) spatial partitioning (geospatial indexing and/or splitting). Geographical areas Z = 1, Z = 2 and Z = 3 contain less than N records and may be used as input for an efficient execution of the anonymization. Geographical areas Z = 4 and Z = 5 contain more than N records and need to be further divided in sub-areas.
c) Outcome of (dynamic) spatial partitioning (geospatial indexing and/or splitting). All the areas Z = 1, 2, 3, 6, 7, 8, 9, 10, 11, 12, 13 contain less than N records and may be used to perform anonymization in an efficient way providing representative results.

This approach results in dynamic grid sizes that may span in reality from less than 0.01 km² to 100 km², as shown in fig. 1. In contrast to state of the art methods that only anonymize on fixed grid levels not leveraging the smaller grid sizes that could be possible because of high vehicle coverage in dense, urban areas.

### II Spatial aggregation, comprising preferably two level i, j aggregation

The dynamic spatial anonymization follows preferably a two level i, j aggregation approach.

Vehicle data aggregation may use the information advantage that is available for non-anonymized vehicle data D(t) prior to anonymization in action II.

Vehicle data aggregation II provides a combination of multiple vehicle data D(t), that is records and/or measurements and/or pints in the view of fig. 1, aggregated to a lower number of values, and thus providing anonymization,

| | |
|---|---|
| first level i | aggregation within vehicle data Di(t) from every single vehicle 10, preferably reducing the effect of sensor noise, for example removing data outliers, and/or highlighting some unusual measurement of interest. |
| second level j | aggregation within vehicle data D(t) coming from several vehicles 10 in the same area combined to groups G of k-members. |

Thus, the amount of vehicle data D(t) to be anonymized (Dj_mean) in one execution may be considerably reduced with the help of spatial aggregation II.

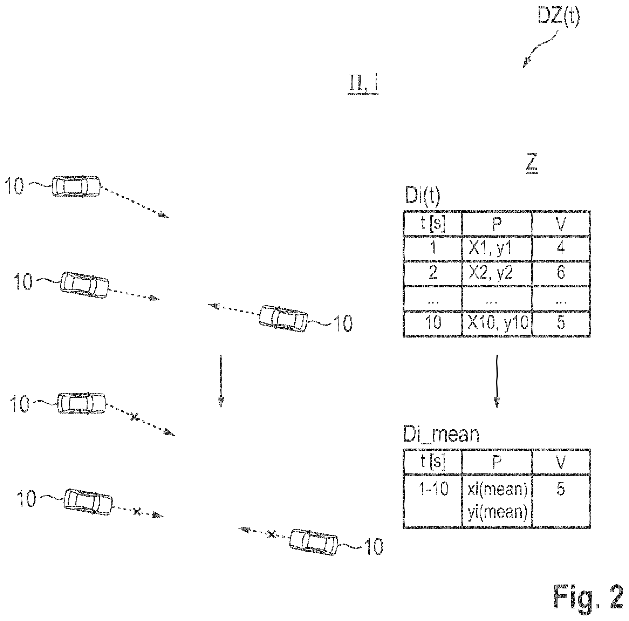

A first level i of aggregation is illustrated in fig. 2.

By assuming that the vehicle data D(t) from a single vehicle 10 does not vary significantly in a certain time interval dt, and the sensor sampling frequency is higher than needed, it is possible to aggregate the vehicle data D(t) coming from a single vehicle 10 without losing significant information. Thus, the relevant information may be reliably maintained within a corresponding data point Di_mean.

For example, by collecting temperature measurements in a certain area Z, the temperature sampling frequency on the vehicle may be 1Hz. It may be possible to aggregate together the temperature information provided from a single vehicle 10 in the same time interval, e.g. 10 s, without losing relevant information. The temperature usually does not change significantly within in 10 s. Also, the vehicle displacement in such a time interval dt may be neglected for the specific vehicle service, but the amount of data to process by anonymization is 10 times smaller.

For example, by collecting the rain intensity measurements, it may happen that the vehicle 10 passes under some roof, bridge or tree. In this case these unusual measurements may be considered as an outlier in the 10s time window. The vehicle data D(t) aggregation may preferably filter out the effects of such outliers.

The data aggregation may also highlight some uncommon measurement. For example by collecting the slipping coefficient of the road in a certain area, in a certain time, due to ice slabs on the street, it is possible to take into account each single ice slab on the road, even if small. Aggregated data in this case will contain the information about the "ice", even if for most of the 10 s time-interval there was no ice on the road.

Thus, the data quality may be improved with the help of filtering and/or highlighting the vehicle data D(t).

In general for each sensor type, signal source and/or data type, a different aggregation methodology may be applied that has proven to be valuable for the specific cases. Aggregation methodologies comprehend statistical indicators (mean, max, n-th percentile, etc...), a combination of them, or functions implemented ad hoc for the specific use-case.

Thus, improving quality and reliability of data prior to anonymization.

In the first step i, time series data D(t) from single vehicles 10 will be recorded over a time interval dt, comprising positional information (spatial data P) along the trajectory of a vehicle 10 together with recorded information (sensor data V) of the vehicle sensors. As illustrated in fig. 2 a single vehicle trajectory over a time interval dt, for example from 1 to 10 s, is depicted using arrows, where every dot stands for a single recorded spatial data P and a corresponding sensor data V. This vehicle trajectory is then aggregated into one data point Di_mean illustrated using the cross. The vehicle data Di(t) from vehicles 10 will be aggregated into corresponding data points Di_mean containing only an aggregate. Thus, no exact position (spatial data P) but only an aggregation of the perceived sensor data V will be maintained within the data points Di_mean.

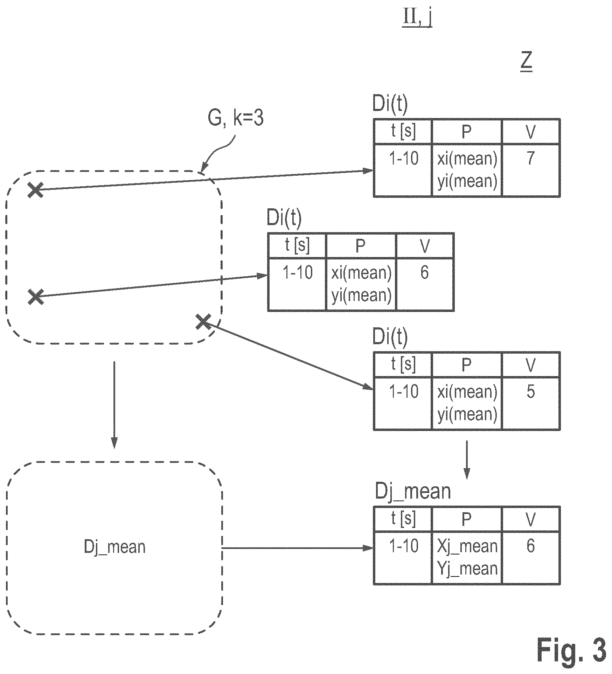

A second level j of aggregation is illustrated in fig. 3.

A second level j of aggregation is thus performed within a set of vehicles 10 in the same time interval dt and in the same geographical area Z. This second step j of aggregation allows to reach the anonymization goal, because from the aggregated data it would be extremely unlikely to go back to the single vehicle 10 that contributed to the aggregated data set Dj_mean.

In the second step j of the spatial anonymization following the k-anonymity methodology, multiply aggregated data points Di_mean coming from different vehicles 10 will be arranged in groups G of k vehicles 10, preferably using the k nearest neighbor method. Data of these groups G of k vehicles 10 (for example k=3) are then aggregated again leaving only information about the portion of the geographical area Z where the group G of vehicles were located in and aggregate values. The number of groups G may be smaller than the number of vehicles 10 in the corresponding geographical area Z.

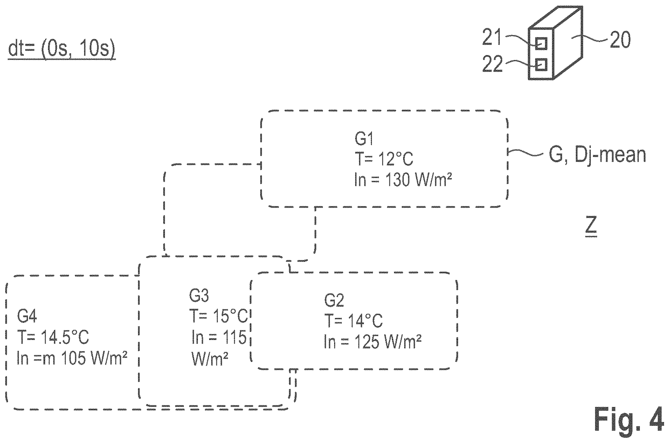

Fig. 4 illustrates the result over a time interval dt from 0 to 10 s for groups G1, G2, G3, G4, ... Fig. 4 shows varying sizes and overlapping portions of the resulting spatial aggregated data sets Dj_mean. As can be seen from fig. 4, overlapping groups G of vehicles 10 may be provided within an associated geographical area Z of the corresponding data subset DZ(t). This allows using data from some vehicles 10 multiple times. Thus, the value of data may be enlarged significantly.

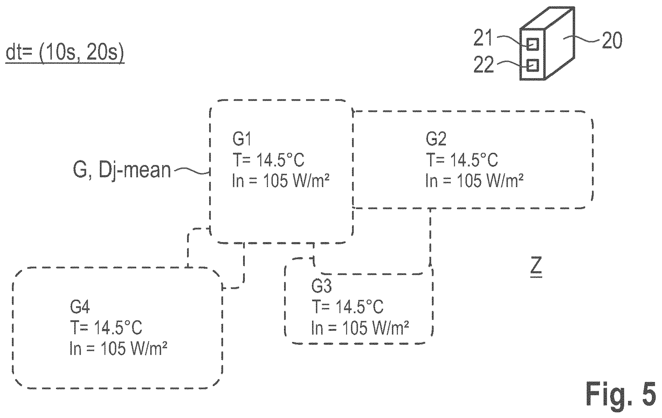

Fig. 5 illustrates the result over a time interval dt from 10 to 20 s, following the time interval dt of fig. 4, for groups G1, G2, G3, G4, .... Comparing fig. 4 and 5, it may be seen, that for every time interval dt new spatial bounding boxes, that is new groups G, comprising different vehicles 10 will be formed grouping the spatially closest vehicles 10 together.

By following the dynamic spatial anonymization, vehicle data D(t) may be fully anonymized within flexible determined geographical areas Z following the methodology of k-anonymity and preferably the k-nearest neighbor grouping/classification.

The dynamic feature of spatial partitioning I allows for arbitrary sizes and locations of the anonymization areas Z.

With the help of the integrating spatial aggregation II, the data quality enhancing aggregation techniques, the reliability of the anonymized data output may be increased.

Furthermore, the presented method, combining both techniques: spatial partitioning I and spatial aggregation II, reduces computational runtime, in particular, in case of big data loads and results in an enhanced privacy protection, even for sparsely covered areas that may now be incorporated within the dynamic grid approach.

A computer program product comprising a program code for carrying out a method as described above provides an aspect of the invention.

Also, a device 20, especially backend device, provides an aspect of the invention. The device 20 is only shown schematically in fig. 4 and 5. The device 20 comprises a memory device 21 in which program code is stored, and a computing device 22 configured to execute the program code, wherein when executing the program code, a method may be performed as described above. The memory device 21 may further comprise a database for spatial aggregated data sets Dj_mean. The computing device 22 may be configured to provide vehicle services, comprising navigation services, map services and/or forecast services etc., to participating vehicles 10 using the aggregated data sets Dj_mean. Furthermore, the computing device 22 may be configured to provide different vehicle services depending on service type, signal source and/or data type.

The above description of the figures describes the present invention only in the context of examples. Of course, individual features of the embodiments may be combined with each other, provided it is technically reasonable, without leaving the scope of the invention as defined by the independent claims.

### Reference signs

- 10: vehicle

- 20: device
- 21: memory device
- 22: computing device

- t: time
- dt: time interval

- D(t): vehicle data
- DZ(t): data subsets
- N: a maximal amount of records within a data subset

- Di(t): vehicle data, coming from a single vehicle
- Di_mean: data point

- G: group of vehicles
- k: particular number of vehicles within a group
- Dj_mean: aggregated data set

- G1: group
- G2: group
- G3: group
- G4: group
- T: temperature
- In: light intensity

- P: spatial data
- V: sensor data

- Z: geographical areas

## Claims

1. A method for dynamic spatial anonymization of vehicle data in a cloud environment, the method comprising:
- collecting vehicle data (D(t)),
- spatial partitioning the vehicle data (D(t)) into data subsets (DZ(t)) dynamically associated with different geographical areas (Z) of various sizes and comprising a maximal amount (N) of records within each data subset (DZ(t)) using an iterative splitting of incoming sets of records into geographical areas (Z) having different resolution levels,
- spatial aggregation of the vehicle data (D(t)) within the data subsets (DZ(t)), providing two level aggregation:
- aggregation of vehicle data (Di(t)), coming from a single vehicle (10), to a corresponding data point (Di_mean) and
- aggregation of data points (Di_mean), coming from a group (G) of vehicles (10) comprising a particular number (k) of vehicles (10), to a spatial aggregated data set (Dj_mean).

2. The method according to claim 1,
**wherein**
the vehicle data (D(t)) will be collected periodically with a time interval (dt),
wherein especially the time interval (dt) is chosen depending on vehicle service, sensor type, signal source and/or data type,
**and/or wherein**
spatial partitioning is used for reducing the amount of records intended to be anonymized in one execution,
**and/or wherein**
the spatial aggregation is used for anonymization of the vehicle data (D(t)), especially within a current time interval (dt), within a corresponding data subset (DZ(t)) and/or within an associated geographical area (Z).

3. The method according to claim 1 or 2,
**wherein**
the spatial aggregation is provided using the k-anonymity methodology,
**and/or wherein**
a spatial aggregated data set (Dj_mean) aggregates data points (Di_mean) coming from different vehicles (10) arranged into groups (G) using the k-nearest neighbor method.

4. The method according to any one of the preceding claims,
**wherein**
a spatial aggregated data set (Dj_mean) multiply aggregates data points (Di_mean) coming from different vehicles (10),
wherein especially some vehicles (10) will be arranged to more than one group (G).

5. The method according to any one of the preceding claims,
**wherein**
the vehicle data (D(t)) comprise sensor data (V) and spatial data (P),
**and/or wherein**
sensor data comprise environmental data, temperature values, humidity values, rain intensity, slipping coefficient, etc.
**wherein**
a data point (Di_mean) coming from a single vehicle (10) comprises aggregated sensor data (V) and aggregated spatial data (P) for the single vehicle (10),
**and/or wherein**
a spatial aggregated data set (Dj_mean) coming from a group of vehicles (10) comprises aggregated sensor data (V) and aggregated spatial data (P) for the group (G) of vehicles (10).

6. The method according to any one of the preceding claims,
**wherein**
vehicle data (D(t)) within a data point (Di_mean) will be filtered in order to exclude unusual measurements.

7. The method according to any one of the preceding claims,
**wherein**
vehicle data (D(t)) within a data point (Di_mean) will be highlighted in order to detect environmental effects, such as ice slabs on the street, in highly restricted areas within a particular geographical area (Z).

8. The method according to any one of the preceding claims,
**wherein**
the spatial aggregation is performed using different aggregation methodologies for different vehicle services, sensor types, signal sources and/or data types,
**and/or wherein**
a particular aggregation methodology is chosen depending on vehicle service, sensor type, signal source and/or data type.

9. The method according to any one of the preceding claims,
**wherein**
the spatial partitioning is provided using a method of geospatial indexing.

10. The method according to any one of the preceding claims,
**wherein**
the spatial partitioning is provided until a data subset (DZ(t)) comprise an amount of records lower than the maximal amount (N) of records.

11. The method according to any one of the preceding claims,
**wherein**
the maximal amount (N) of records will be chosen according to computational capacity of a performing device.

12. A computer program product comprising instructions which, when the program is executed by a computer, cause the computer to carry out a method according to any one of preceding claims.

13. A device (20), especially backend device, comprising:
a memory device (21) in which program code is stored, and
a computing device (22) configured to execute the program code, wherein when executing the program code, a method according to any one of the preceding method claims will be performed.

14. The device (20) according to the preceding claim,
**wherein**
the memory device (21) comprises a database for spatial aggregated data sets (Dj_mean).

15. The device (20) according to any one of the preceding device claims,
**wherein**
the computing device (22) is configured to provide vehicle services, comprising navigation services, map services and/or forecast services etc., to participating vehicles (10) using the aggregated data sets (Dj_mean),
**and/or wherein**
the computing device (22) is configured to provide different vehicle services depending on service type, signal source and/or data type.

## Patentansprüche

1. Verfahren zur dynamischen räumlichen Anonymisierung von Fahrzeugdaten in einer Cloud-Umgebung, wobei das Verfahren umfasst:
- Sammeln von Fahrzeugdaten (D(t)),
- räumliches Partitionieren der Fahrzeugdaten (D(t)) in Daten-Teilmengen (DZ(t)), die unterschiedlichen geografischen Gebieten (Z) unterschiedlicher Größe dynamisch zugeordnet sind und innerhalb jeder Daten-Teilmenge (DZ(t)) eine maximale Anzahl (N) von Datensätzen umfassen, unter Verwendung von iterativem Aufteilen der eingehenden Datensätze in geografische Gebiete (Z), die unterschiedliche Auflösungsebenen aufweisen,
- räumliche Aggregation der Fahrzeugdaten (D(t)) innerhalb der Daten-Teilmengen (DZ(t)), wodurch eine Aggregation auf zwei Ebenen bereitgestellt wird:
- Aggregation von Fahrzeugdaten (Di(t)), die von einem einzelnen Fahrzeug (10) stammen, zu einem entsprechenden Datenpunkt (Di_mean) und
- Aggregation von Datenpunkten (Di_mean), die von einer Gruppe (G) von Fahrzeugen (10) stammen, die eine bestimmte Anzahl (k) von Fahrzeugen (10) umfasst, zu einem räumlich aggregierten Datensatz (Dj_mean).

2. Verfahren nach Anspruch 1,
**wobei**
die Fahrzeugdaten (D(t)) periodisch mit einem Zeitintervall (dt) gesammelt werden,
wobei insbesondere das Zeitintervall (dt) in Abhängigkeit von Fahrzeugbetrieb, Sensortyp, Signalquelle und/oder Datentyp ausgewählt wird,
**und/oder wobei**
das räumliche Partitionieren verwendet wird, um die Anzahl von Datensätzen zu reduzieren, die bei einer Ausführung anonymisiert werden sollen,
**und/oder wobei**
die räumliche Aggregation zur Anonymisierung der Fahrzeugdaten (D(t)), insbesondere innerhalb eines aktuellen Zeitintervalls (dt), innerhalb einer entsprechenden Daten-Teilmenge (DZ(t)) und/oder innerhalb eines zugehörigen geografischen Gebiets (Z) verwendet wird.

3. Verfahren nach Anspruch 1 oder 2,
**wobei**
die räumliche Aggregation unter Verwendung der Methodik der k-Anonymität bereitgestellt wird,
**und/oder wobei**
ein räumlich aggregierter Datensatz (Dj_mean) Datenpunkte (Di_mean) aggregiert, die von unterschiedlichen Fahrzeugen (10) stammen, die unter Verwendung des Verfahrens der k nächsten Nachbarn in Gruppen (G) angeordnet wurden.

4. Verfahren nach einem der vorstehenden Ansprüche,
**wobei**
ein räumlich aggregierter Datensatz (Dj_mean) Datenpunkte (Di_mean), die von unterschiedlichen Fahrzeugen (10) stammen, durch Multiplizieren aggregiert,
wobei insbesondere einige Fahrzeuge (10) in mehr als einer Gruppe (G) angeordnet werden.

5. Verfahren nach einem der vorstehenden Ansprüche,
**wobei**
die Fahrzeugdaten (D(t)) Sensordaten (V) und räumliche Daten (P) umfassen
**und/oder wobei**
Sensordaten Umgebungsdaten, Temperaturwerte, Feuchtigkeitswerte, Regenintensität, Rutschkoeffizient usw. umfassen,
**wobei**
ein Datenpunkt (Di_mean), der von einem einzelnen Fahrzeug (10) stammt, aggregierte Sensordaten (V) und aggregierte räumliche Daten (P) für das einzelne Fahrzeug (10) umfasst
**und/oder wobei**
ein räumlich aggregierter Datensatz (Dj_mean), der von einer Gruppe von Fahrzeugen (10) stammt, aggregierte Sensordaten (V) und aggregierte räumliche Daten (P) für die Gruppe (G) von Fahrzeugen (10) umfasst.

6. Verfahren nach einem der vorstehenden Ansprüche,
**wobei**
Fahrzeugdaten (D(t)) innerhalb eines Datenpunkts (Di_mean) gefiltert werden, um ungewöhnliche Messungen auszuschließen.

7. Verfahren nach einem der vorstehenden Ansprüche,
**wobei**
Fahrzeugdaten (D(t)) innerhalb eines Datenpunkts (Di_mean) hervorgehoben werden, um Umgebungsauswirkungen, wie Eisplatten auf der Straße, in stark eingeschränkten Bereichen innerhalb eines bestimmten geografischen Gebiets (Z) zu erkennen.

8. Verfahren nach einem der vorstehenden Ansprüche,
**wobei**
die räumliche Aggregation unter Verwendung unterschiedlicher Aggregationsmethodiken für unterschiedliche Fahrzeugdienste, Sensortypen, Signalquellen und/oder Datentypen durchgeführt wird
**und/oder wobei**
eine bestimmte Aggregationsmethodik je nach Fahrzeugdienst, Sensortyp, Signalquelle und/oder Datentyp ausgewählt wird.

9. Verfahren nach einem der vorstehenden Ansprüche,
**wobei**
das räumliche Partitionieren unter Verwendung eines Verfahrens des georäumlichen Indizierens bereitgestellt wird.

10. Verfahren nach einem der vorstehenden Ansprüche,
**wobei**
das räumliche Partitionieren bereitgestellt wird, bis eine Daten-Teilmenge (DZ(t)) eine Anzahl von Datensätzen umfasst, die niedriger als die maximale Anzahl (N) von Datensätzen ist.

11. Verfahren nach einem der vorstehenden Ansprüche,
**wobei**
die maximale Anzahl (N) von Datensätzen gemäß der Rechenkapazität einer durchführenden Vorrichtung ausgewählt wird.

12. Computerprogrammprodukt, das Anweisungen umfasst, die, wenn das Programm durch einen Computer ausgeführt wird, den Computer veranlassen, ein Verfahren nach einem der vorstehenden Ansprüche auszuführen.

13. Vorrichtung (20), insbesondere eine Backend-Vorrichtung, die umfasst:
eine Speichervorrichtung (21), in der Programmcode gespeichert ist, und
eine Rechenvorrichtung (22), die zum Ausführen des Programmcodes konfiguriert ist, wobei beim Ausführen des Programmcodes ein Verfahren nach einem der vorstehenden Verfahrensansprüche durchgeführt wird.

14. Vorrichtung (20) nach dem vorstehenden Anspruch,
**wobei**
die Speichervorrichtung (21) eine Datenbank für räumlich aggregierte Datensätze (Dj_mean) umfasst.

15. Vorrichtung (20) nach einem der vorstehenden Vorrichtungsansprüche,
**wobei**
die Rechenvorrichtung (22) konfiguriert ist, um Fahrzeugdienste, die Navigationsdienste, Kartendienste und/oder Vorhersagedienste usw. umfassen, für teilnehmende Fahrzeuge (10) unter Verwendung der aggregierten Datensätze (Dj_mean) bereitzustellen,
**und/oder wobei**
die Rechenvorrichtung (22) konfiguriert ist, um je nach Diensttyp, Signalquelle und/oder Datentyp unterschiedliche Fahrzeugdienste bereitzustellen.

## Revendications

1. Procédé d'anonymisation spatiale dynamique de données de véhicule dans un environnement en nuage, le procédé comprenant :
- la collecte de données de véhicule (D(t)),
- le partitionnement spatial des données de véhicule (D(t)) en sous-ensembles de données (DZ(t)) dynamiquement associés à différentes zones géographiques (Z) de différentes tailles et comprenant une quantité maximale (N) d'enregistrements au sein de chaque sous-ensemble de données (DZ(t)) à l'aide d'un fractionnement itératif d'ensembles d'enregistrements entrants en zones géographiques (Z) ayant différents niveaux de résolution,
- l'agrégation spatiale des données de véhicule (D(t)) au sein des sous-ensembles de données (DZ(t)), ce qui permet une agrégation à deux niveaux :
- l'agrégation de données de véhicule (Di(t)), provenant d'un seul véhicule (10), en un point de données correspondant (Di_mean) et
- l'agrégation de points de données (Di_mean), provenant d'un groupe (G) de véhicules (10) comprenant un nombre particulier (k) de véhicules (10), en un ensemble de données spatiales agrégées (Dj_mean).

2. Procédé selon la revendication 1,
dans lequel
les données de véhicule (D(t)) seront collectées périodiquement avec un intervalle de temps (dt),
dans lequel en particulier l'intervalle de temps (dt) est choisi en fonction d'un service de véhicule, d'un type de capteur, d'une source de signal et/ou d'un type de données,
et/ou dans lequel
le partitionnement spatial est utilisé pour réduire les quantités d'enregistrements à rendre anonymes en une seule exécution,
et/ou dans lequel
l'agrégation spatiale est utilisée pour l'anonymisation des données de véhicule (D(t)), en particulier au sein d'un intervalle de temps actuel (dt), au sein d'un sous-ensemble de données (DZ(t)) correspondant et/ou dans une zone géographique (Z) associée.

3. Procédé selon la revendication 1 ou 2,
dans lequel
l'agrégation spatiale est fournie à l'aide de la méthodologie du k-anonymisation,
et/ou dans lequel
un ensemble de données spatiales agrégées (Dj_mean) agrège des points de données (Di_mean) provenant de différents véhicules (10) agencés en groupes (G) à l'aide du procédé des k plus proches voisins.

4. Procédé selon l'une quelconque des revendications précédentes,
dans lequel
un ensemble de données spatiales agrégées (Dj_mean) agrège par multiplication des points de données (Di_mean) provenant de différents véhicules (10),
dans lequel en particulier certains véhicules (10) seront agencés dans plus d'un groupe (G).

5. Procédé selon l'une quelconque des revendications précédentes,
dans lequel
les données de véhicule (D(t)) comprennent des données de capteur (V) et des données spatiales (P),
et/ou dans lequel
les données de capteur comprennent des données environnementales, des valeurs de température, des valeurs d'humidité, une intensité de la pluie, un coefficient de glissement, etc.
dans lequel
un point de données (Di_mean) provenant d'un seul véhicule (10) comprend des données de capteur agrégées (V) et des données spatiales agrégées (P) pour le seul véhicule (10),
et/ou dans lequel
un ensemble de données spatiales agrégées (Dj_mean) provenant d'un groupe de véhicules (10) comprend des données de capteur agrégées (V) et des données spatiales agrégées (P) pour le groupe (G) de véhicules (10).

6. Procédé selon l'une quelconque des revendications précédentes,
dans lequel
les données de véhicule (D(t)) au sein d'un point de données (Di_mean) seront filtrées afin d'exclure les mesures inhabituelles.

7. Procédé selon l'une quelconque des revendications précédentes,
dans lequel
les données de véhicule (D(t)) au sein d'un point de données (Di_mean) seront mises en évidence afin de détecter des effets environnementaux, tels que des plaques de glace dans la rue, dans des zones très restreintes au sein d'une zone géographique (Z) particulière.

8. Procédé selon l'une quelconque des revendications précédentes,
dans lequel
l'agrégation spatiale est réalisée à l'aide de différentes méthodologies d'agrégation pour différents services de véhicules, types de capteurs, sources de signaux et/ou types de données,
et/ou dans lequel
une méthodologie d'agrégation particulière est choisie en fonction d'un service du véhicule, d'un type de capteur, d'une source de signal et/ou d'un type de données.

9. Procédé selon l'une quelconque des revendications précédentes,
dans lequel
le partitionnement spatial est fourni à l'aide d'un procédé d'indexation géospatiale.

10. Procédé selon l'une quelconque des revendications précédentes,
dans lequel
le partitionnement spatial est fourni jusqu'à ce qu'un sous-ensemble de données (DZ(t)) comprenne une quantité d'enregistrements inférieure à la quantité maximale (N) d'enregistrements.

11. Procédé selon l'une quelconque des revendications précédentes,
dans lequel
la quantité maximale (N) d'enregistrements sera choisie selon la capacité de calcul d'un dispositif de réalisation.

12. Produit-programme informatique comprenant des instructions, qui lorsque le programme est exécuté par un ordinateur, amènent l'ordinateur à mettre en œuvre un procédé selon l'une quelconque des revendications précédentes.

13. Dispositif (20), en particulier dispositif dorsal, comprenant :
un dispositif de mémoire (21), dans lequel est stocké un code de programme, et
un dispositif informatique (22) configuré pour exécuter le code de programme, dans lequel, lors de l'exécution du code de programme, un procédé selon l'une quelconque des revendications de procédé précédentes sera réalisé.

14. Dispositif (20) selon la revendication précédente,
dans lequel
le dispositif de mémoire (21) comprend une base de données pour des ensembles de données spatiales agrégées (Dj_mean).

15. Dispositif (20) selon l'une quelconque des revendications de dispositif précédentes,
dans lequel
le dispositif informatique (22) est configuré pour fournir des services aux véhicules, y compris des services de navigation, des services cartographiques et/ou des services de prévision, et autres, aux véhicules participants (10) à l'aide des ensembles de données agrégées (Dj_mean),
et/ou dans lequel
le dispositif informatique (22) est configuré pour fournir différents services aux véhicules en fonction d'un type de service, d'une source de signal et/ou d'un type de données.
